# EUROPEAN PATENT SPECIFICATION

(11) **EP 3 989 398 B1**
(45) Date of publication and mention of the grant of the patent: **01.04.2026**
(21) Application number: 20826696.5
(22) Date of filing: 13.05.2020
(51) Int. Cl.: H02K 1/04, H02K 1/18, H02K 5/02, H02K 5/04, H02K 5/08, H02K 5/136

(54) **MOTOR**
MOTOR
MOTEUR

(30) Priority: 20.06.2019 CN 201920935779 U
(43) Date of publication of application: 27.04.2022
(73) Proprietor: Panasonic Intellectual Property Management Co., Ltd., Osaka-shi, Osaka 540-6207 (JP)
(72) Inventor: NANBU, Yasuo, Osaka-shi, Osaka 540-6207 (JP); AMAYA, Takanori, Osaka-shi, Osaka 540-6207 (JP)
(74) Representative: SSM Sandmair
(86) International application number: PCT/JP2020/019148
(87) International publication number: WO 2020/255592

(56) References cited:
- WO-A1-2018/097167
- WO-A1-2018/159537
- WO-A1-2018/159537
- JP-A- 2002 106 660
- JP-A- 2019 022 416
- JP-U- S57 113 636

## Description

### TECHNICAL FIELD

The present disclosure relates to a field of motors, and more particularly to a motor having a stator covered with a mold resin.

### BACKGROUND ART

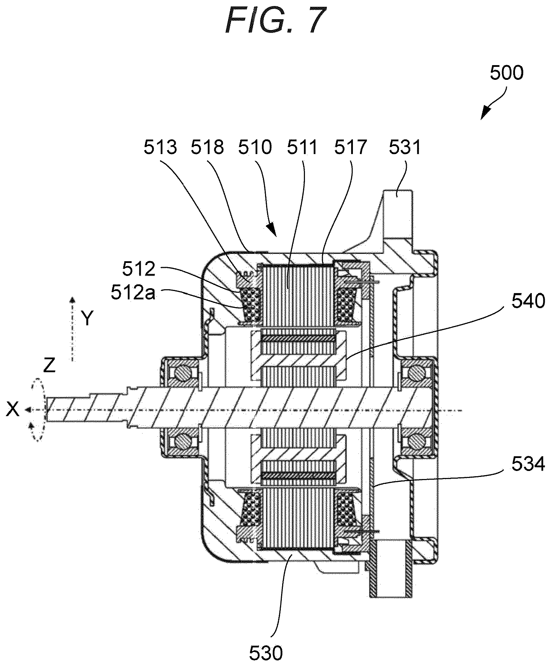

FIG. 7 is a cross-sectional view showing a configuration example of conventional motor 500. As shown in FIG. 7, in motor 500 including stator 510 and rotor 540, a motor having a configuration where stator 510 is covered with mold resin 530 is also referred to as a mold motor and is already widely known.

As shown in FIG. 7, stator 510 has stator core 511 made of a plurality of metal plates, and coil 512 obtained by winding a winding wire around stator core 511. Coil 512 provided on stator 510 is covered with mold resin 530. As shown in FIG. 7, portions of coil 512 protruding from stator core 511 are also referred to as coil ends 512a. Insulator 513 is attached between coil 512 and stator core 511 for the purpose of electrical insulation between coil 512 and stator core 511.

When an excessive current flows through coil 512, coil 512 generates heat and has an extremely high temperature, and this poses a risk of a layer short. That is, an outer periphery of a conductor of the winding wire configuring coil 512 is covered with an insulator. However, when coil 512 generates heat, there is a risk that in the winding wire whose outer periphery is insulated by the insulator, the conductors are short-circuited due to melting of the insulator by heat or the like. When a layer short occurs in coil 512 under a special environment where no safety protection device can be operated, a spark may occur. There is a risk that the spark ignites a gas generated by heating insulator 513 or the like, and causes firing.

On the other hand, in a portion where coil 512 and mold resin 530 are in contact with each other, physical characteristics of mold resin 530 may be deteriorated due to the applied heat or the like. When the physical characteristics of mold resin 530 deteriorate, cracks and the like occur in mold resin 530.

Therefore, when a layer short occurs in a state where a crack or the like occurs in mold resin 530, the gas generated from insulator 513 or the like may be ignited, so that there is a risk that the fire leaks to an outside of motor 500 from a cracked portion or the like occurring in mold resin 530.

Here, since a portion of coil 512 other than coil ends 512a is surrounded by stator core 511, there is an extremely low possibility that fire or smoke leaks to the outside. However, since coil ends 512a protrude from stator core 511, it is in contact with mold resin 530. Therefore, there is a possibility that firing occurs from a portion of mold resin 530 in contact with coil ends 512a and the fire and smoke leak to the outside.

In motor 500 as described above and a device provided with motor 500 (also referred to as a motor device), a safety protection circuit configured to prevent an excessive current from flowing through coil 512 of stator 510 is usually provided inside motor 500 (e.g., in circuit board 534 provided inside motor 500) or inside the motor device in order to prevent an excessive current from flowing through coil 512 and fire or smoke from being emitted as described above.

In order to prevent the firing from spreading from the inside of motor 500, in motor 500, coil ends 512a protruding from end portions of stator core 511 to both ends in an axial direction are covered with metal covers 517, 518. One metal cover 517 is located inside mold resin 530, and other metal cover 518 is attached to cover mold resin 530 with an outer shell interposed.

When it is desired to increase an outer diameter of stator core 511 to improve capability of motor 500 or the like, it is difficult to attach metal cover 517 positioned inside mold resin 530. Further, when the position of metal cover 517 is changed to cover the outer shell of mold resin 530 like the metal cover 518, metal cover 517 interferes with attaching leg 531 existing in the outer shell of mold resin 530.

As described above, since motor 500 prevents the fire or the smoke from leaking from the inside of the motor toward the outside, safety is high. In order to replace a motor already on the market with motor 500 having high safety, motor 500 is required to be disposed at a same position as the conventional motor. That is, it is not desirable to change a position of the attaching leg of motor 500 from a position of an attaching leg of the conventional motor.

WO2018097167A1 discloses: A motor, provided with: a stator having a stator core and a coil; a rotor having a rotary shaft and a rotating body; a bearing for rotatably supporting the rotor; and a molded resin for covering the stator. In this motor, the coil has a coil end projecting from the stator core with respect to the axial core X direction, and is provided with an incombustible layer covering the coil end. The incombustible layer is, e.g., a metal cover made of a metal. The metal cover is placed so as to cover the area surrounding a coil assembly on which the coil is formed on the stator core with an insulator interposed therebetween. The metal cover is integrated with the coil assembly with the molded resin.

WO2018159537A1 discloses: A molded motor according to the present invention is provided with a rotor, a stator, a pair of bearings, a pair of metal brackets, and a molded resin. The rotor has a rotating shaft extending in the axial direction and a rotating body that holds a permanent magnet and that is fixed to the rotating shaft. The stator: has a stator core in which a plurality of salient poles are formed, and a plurality of coils wound on the respective salient poles of the stator core with insulators interposed therebetween; is covered with the molded resin; and is disposed so as to face the rotor. The pair of metal brackets fix the respective bearings, and these bearings rotatably support the rotor. In addition, the rotating body has a dielectric layer formed between the rotating shaft and an outer circumferential surface of the rotating body. Furthermore, a metal member is provided in the circumferential direction at a site that is on the outer circumferential side of a coil end of the coils and that faces at least the coil end.

### SUMMARY OF THE INVENTION

In view of the above, a problem that the present disclosure is to solve is to provide a motor capable of preventing fire and smoke from coming outside from the motor without changing positions of attaching legs.

In order to solve the above problem, according to independent claim 1, there is provided a motor including: a stator having a stator core and a coil wound around the stator core; a rotor that has a rotating shaft extending in an axial direction and is rotatably located inside the stator; and a mold resin covering the stator, wherein the coil has coil ends protruding from the stator core to both sides in the axial direction, a first incombustible material cover is mounted on an outer peripheral surface of the mold resin to surround, over a circumferential direction, one of the coil ends protruding to both the sides in the axial direction, a plurality of attaching legs are provided along the circumferential direction on the outer peripheral surface of the mold resin, a root portion of each of the plurality of attaching legs, the root portion being connected to the outer peripheral surface of the mold resin, is formed with a circumferential groove extending along the circumferential direction and opened to both sides in the circumferential direction and one side in the axial direction, and a distal end of the first incombustible material cover on the one side in the axial direction enters the circumferential groove of each of the plurality of attaching legs.

By providing the first incombustible material cover on the outer peripheral surface of the mold resin, the stator core can be formed larger without changing an outer diameter of the motor, and capability of the motor can be improved. In addition, by forming the circumferential groove in the attaching leg and causing the distal end of the first incombustible material cover to enter the circumferential groove, interference between the attaching leg and the first incombustible material cover can be avoided without changing a position of an attaching surface of the attaching leg in the axial direction. Therefore, the motor can be disposed at the same position as a conventional motor, and fire and smoke can be prevented from coming outside from the motor.

In one possible exemplary embodiment of the motor, one or more positioners that abut on the distal end of the first incombustible material cover are formed on the outer peripheral surface of the mold resin, the one or more positioners are each positioned and formed between the plurality of attaching legs in the circumferential direction, and the one or more positioners are each formed at a position where, in the axial direction, an end portion of the positioner on the side where the first incombustible material cover is mounted abuts on the distal end of the first incombustible material cover on the side where the first incombustible material cover is mounted with respect to a bottom portion of the circumferential groove.

With the configuration where the distal end of the first incombustible material cover abuts on the positioner before reaching the bottom portion of the circumferential groove, the distal end of the first incombustible material cover can be prevented from applying stress to the attaching leg and causing cracking, buckling, or the like in the attaching leg when the first incombustible material cover is mounted.

In one possible exemplary embodiment of the motor, one or more positioners are formed on the outer peripheral surface of the mold resin, the one or more positioners are each positioned and formed between the plurality of attaching legs in the circumferential direction, a cutout portion having a shape corresponding to the one or more positioners is formed at a position each corresponding to the one or more positioners in the circumferential direction at the distal end of the first incombustible material cover, and the one or more positioners are each formed at a position where each of the one or more positioners is locked to the cutout portion of the first incombustible material cover, and at a position where a bottom portion of the circumferential groove and the distal end of the first incombustible material cover do not abut on each other in the axial direction.

By forming the positioner on the outer peripheral surface of the mold resin and forming the cutout portion corresponding to the positioner at the distal end of the first incombustible material cover, the first incombustible material cover can be positioned not only in the axial direction but also in the circumferential direction, and thus, the first incombustible material cover is prevented from swinging in the circumferential direction due to vibration of the motor or the like.

In one possible exemplary embodiment of the motor, a plurality of the positioners are formed at equal intervals in the circumferential direction on the outer peripheral surface of the mold resin.

By forming the plurality of positioners at equal intervals, the above-described positioning in at least one of the axial direction and the circumferential direction can be more reliably achieved.

In one possible exemplary embodiment of the motor, the first incombustible material cover is formed of metal.

By forming the first incombustible material cover of metal, workability and mountability of the first incombustible material cover can be effectively secured.

In one possible exemplary embodiment of the motor, the first incombustible material cover is formed of iron, stainless steel, brass, or aluminum.

By forming the first incombustible material cover of iron, stainless steel, brass, or aluminum, workability and mountability of the first incombustible material cover can be effectively secured while suppressing cost.

In one possible exemplary embodiment of the motor, a cross-sectional shape of the circumferential groove is substantially a U shape.

When the cross-sectional shape of the circumferential groove is substantially U shape, workability of the circumferential groove can be secured.

In one possible exemplary embodiment of the motor, a cross-sectional shape of the circumferential groove is a tapered shape.

When the cross-sectional shape of the circumferential groove is a tapered shape, workability of the circumferential groove can be secured.

In one possible exemplary embodiment of the motor, a thick portion having a cross-sectional shape corresponding to the cross-sectional shape of the circumferential groove is formed at the distal end of the first incombustible material cover.

By forming the thick portion having the cross-sectional shape corresponding to the cross-sectional shape of the circumferential groove at the distal end of the first incombustible material cover, the distal end of the first incombustible material cover can be prevented from buckling or dust can be prevented from entering a gap between the distal end of the first incombustible material cover and the circumferential groove.

In one possible exemplary embodiment of the motor, the distal end of the first incombustible material cover is chamfered.

By chamfering the distal end of the first incombustible material cover, a corner portion of the distal end of the first incombustible material cover can be prevented from applying stress to the bottom portion of the circumferential groove.

In one possible exemplary embodiment of the motor, a length of the attaching leg in the axial direction is in a range of 9 mm to 14 mm.

By setting the length of the attaching leg in the axial direction in the above range, a strength of the attaching leg can be effectively secured.

In one possible exemplary embodiment of the motor, a depth of the circumferential groove in the axial direction is in a range of 2 mm to 4 mm.

By setting the depth of the circumferential groove in the axial direction in the above range, interference between the attaching leg and the first incombustible material cover can be effectively prevented while securing the strength of the attaching leg.

In one possible exemplary embodiment of the motor, a reinforcing rib is formed on the attaching leg on the side opposite to the side where the circumferential groove is formed in the axial direction.

By forming the reinforcing rib on the attaching leg, the strength of the attaching leg can be more effectively secured.

In one possible exemplary embodiment of the motor, on the outer peripheral surface of the mold resin, a second incombustible material cover is mounted to surround, over the circumferential direction, the other coil end of the coil ends protruding to both the sides in the axial direction.

By providing the second incombustible material cover, fire and smoke can be prevented from coming outside the motor from the other coil end.

In one possible exemplary embodiment of the motor, the first incombustible material cover also covers a connecting wire of the coil.

Since the connecting wire of the coil is also covered with the first incombustible material cover, fire and smoke can be more effectively prevented from coming outside the motor from the one coil end.

In order to solve the above problem, according to another exemplary embodiment of the present disclosure, there is provided a motor including: a stator having a stator core and a coil wound around the stator core; a rotor that has a rotating shaft extending in an axial direction and is rotatably located inside the stator; and a mold resin covering the stator, wherein the coil has coil ends protruding from the stator core to both sides in the axial direction, a first incombustible material cover is mounted on an outer peripheral surface of the mold resin to surround, over a circumferential direction, one of the coil ends protruding to both the sides in the axial direction, a plurality of attaching legs are provided along the circumferential direction on the outer peripheral surface of the mold resin, a plurality of cutout portions are formed at positions corresponding to the plurality of attaching legs in the circumferential direction at a distal end of the first incombustible material cover, and the first incombustible material cover is mounted, each of the plurality of attaching legs entering each of the plurality of cutout portions.

By providing the first incombustible material cover on the outer peripheral surface of the mold resin, the stator core can be formed larger without changing an outer diameter of the motor, and capability of the motor can be improved. In addition, by forming the cutout portion at the distal end of the first incombustible material cover and causing the attaching leg to enter the cutout portions, interference between the attaching leg and the first incombustible material cover can be avoided without changing a position of an attaching surface of the attaching leg in the axial direction. Therefore, the motor can be disposed at the same position as the conventional motor, and fire and smoke can be prevented from coming outside from the motor.

According to the motor of the present disclosure, it is possible to provide a motor capable of preventing fire and smoke from coming outside from the motor without changing the positions of the attaching legs.

Other features and aspects of the present disclosure will become clearer by describing an exemplary embodiment in detail with reference to the following drawings.

### BRIEF DESCRIPTION OF DRAWINGS

FIG. 1 is a perspective view showing an appearance of motor 100 according to the present disclosure.
FIG. 2 is a cross-sectional view of motor 100 along axial direction X.
FIG. 3 is another cross-sectional view of motor 100 along axial direction X.
FIG. 4 is a cross-sectional view of motor 100 taken along line A-A in FIG. 2.
FIG. 5 is an enlarged view of a part of FIG. 2.
FIG. 6 is an enlarged view of a part of FIG. 3.
FIG. 7 is a cross-sectional view showing a configuration example of a conventional motor.

### DESCRIPTION OF EMBODIMENT

Hereinafter, an exemplary embodiment of the present disclosure will be described with reference to the drawings. In the following description, same components are denoted by same reference marks, and description thereof will be applied.

In addition, in order to better describe the present disclosure, many specific details will be described in the following specific exemplary embodiment. It should be understood by those skilled in the art that the present disclosure can be carried out similarly without any specific details. To emphasize the gist of the present disclosure, in the following exemplary embodiment, detailed descriptions of methods, means, elements, and circuits that are well known to those skilled in the art will not be given.

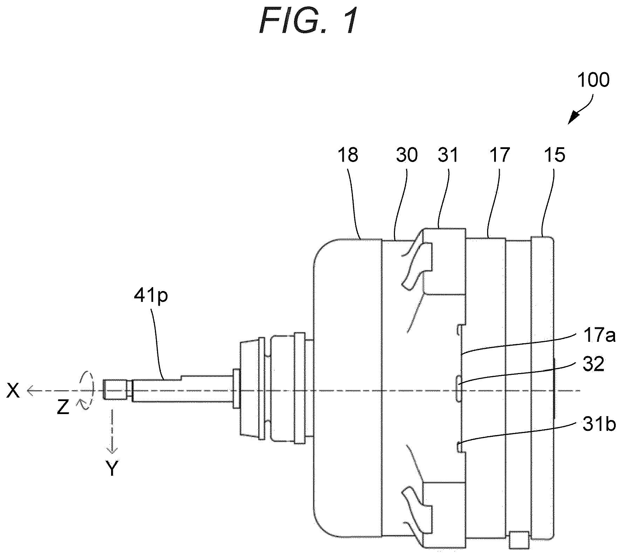

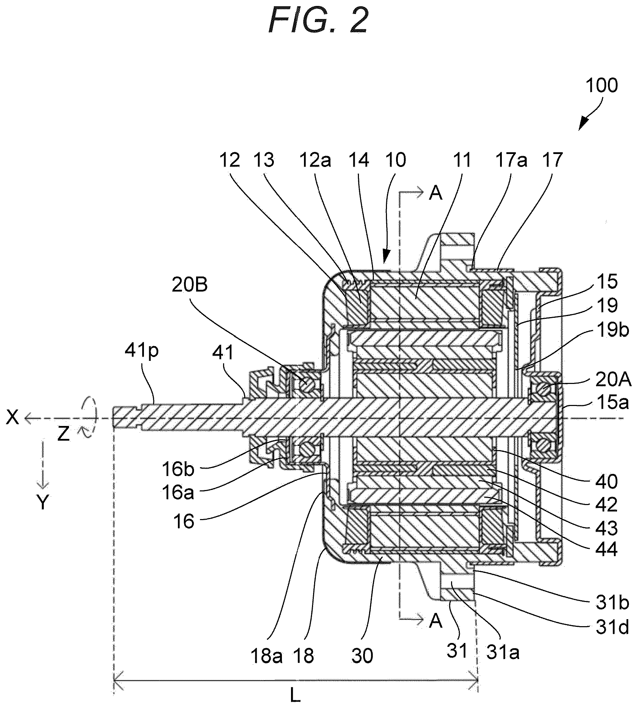

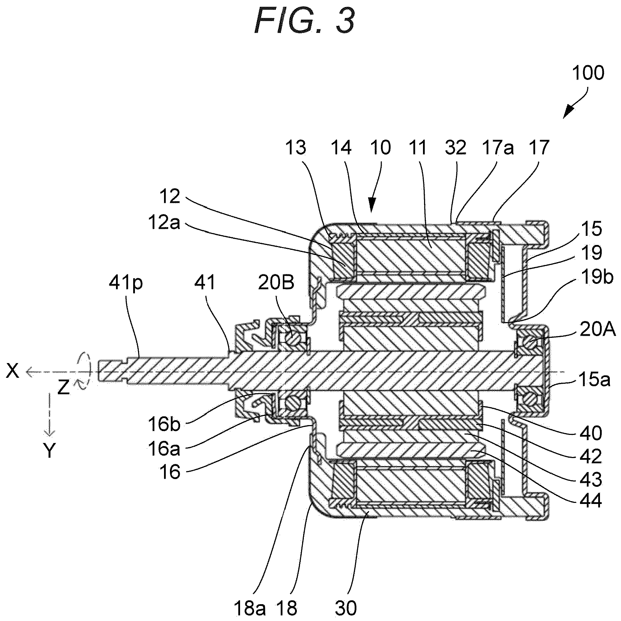

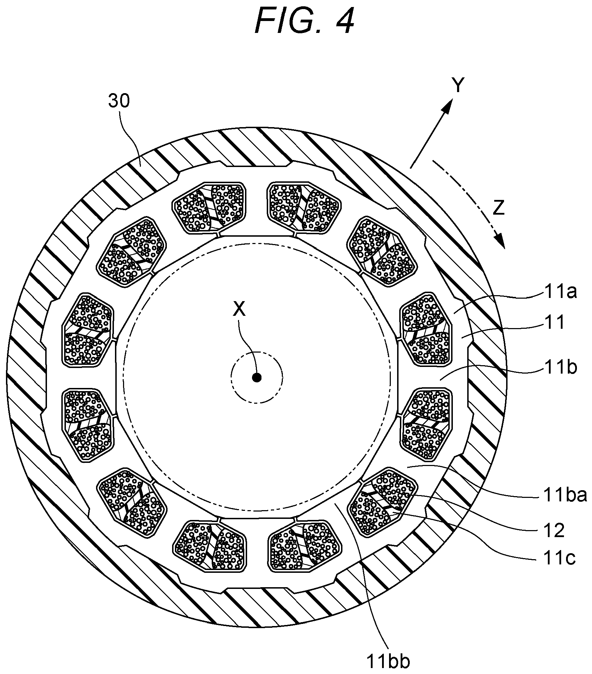

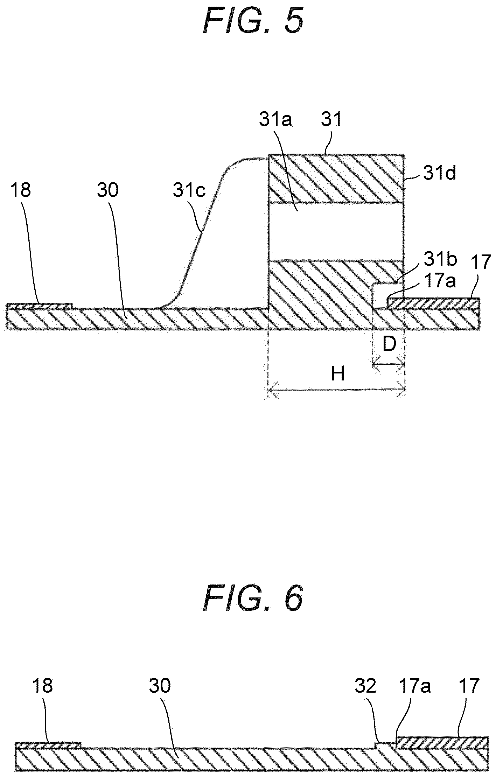

FIG. 1 is a perspective view showing an appearance of motor 100 according to the present disclosure. FIG. 2 is a cross-sectional view of motor 100 along axial direction X, and is a view of motor 100 cut along axial direction X at a position where attaching legs 31 exist. FIG. 3 is another cross-sectional view of motor 100 along axial direction X, and is a view of motor 100 cut along axial direction X at a position where positioners 32 exist. FIG. 4 is a cross-sectional view of motor 100 taken along line A-A in FIG. 2. FIG. 5 is an enlarged view of a part of FIG. 2. FIG. 6 is an enlarged view of a part of FIG. 3.

In the present exemplary embodiment, motor 100 will be described as an example of a brushless motor including a permanent magnet in a rotor. Hereinafter, as shown in FIG. 1, a direction where rotating shaft 41 extends is referred to as axial direction X. In a plane orthogonal to axial direction X, a direction extending from a center of rotating shaft 41 will be described as radial direction Y, and a direction going around the center of rotating shaft 41 will be described as circumferential direction Z.

First, as shown in FIGS. 2, 3, motor 100 according to the present exemplary embodiment includes stator 10, rotor 40, first bracket 15, circuit board 19, two bearings 20A, 20B, first incombustible material cover 17, and second incombustible material cover 18.

As shown in FIGS. 2, 3, stator 10 includes coil assembly 14 including stator core 11, coils 12, and insulators 13. Coil assembly 14 is assembled by winding each of coils 12 around stator core 11 with insulators 13 interposed, insulators 13 being made of an insulating material.

In addition, as shown in FIG. 4, stator core 11 includes yoke 11a having a ring shape and a plurality of teeth 11b extending radially inward from an inner peripheral surface of yoke 11a. The plurality of teeth 11b are disposed at equal intervals in circumferential direction Z while slots 11c that are opening portions are formed between the teeth. A tooth distal end portion 11bb extending in circumferential direction Z is formed at an extended distal end portion of each of teeth 11b, tooth distal end portion 11bb being wider than tooth intermediate portion 11ba. An inner peripheral surface of tooth distal end portion 11bb is a magnetic pole surface facing an outer peripheral surface of rotor 40. With respect to stator core 11 having the above-described configuration, coil 12 is formed by winding a winding wire around each of teeth 11b while passing the winding wire through an opening space of each of slots 11c.

As shown in FIGS. 2, 3, coil 12 has coil ends 12a protruding from stator core 11 to both sides in axial direction X. A portion of coil 12 other than coil ends 12a is accommodated in slot 11c of stator core 11. Respective coils 12 are connected by connecting wires (not shown). The connecting wires are each usually disposed on a radially outer peripheral surface of insulator 13. Coil 12 wound around each of teeth 11b is energized and driven by, for example, three-phase AC including a U phase, a V phase, and a W phase electrically different from one another by 120 degrees.

Further, in the present exemplary embodiment, as shown in FIGS. 2, 3, motor 100 includes second bracket 16 disposed to protrude to a side opposite to the direction where first bracket 15 is located. Stator 10 is integrally molded with mold resin 30, coil assembly 14 and second bracket 16 being disposed at predetermined positions and being covered with the resin material. Stator 10 configured as described above has a substantially cylindrical shape, and the plurality of attaching legs 31 for attaching motor 100 to an external device or the like, and the plurality of positioners 32 for positioning first incombustible material cover 17 are provided on an outer peripheral surface of a cylinder along the circumferential direction (see details described later). Further, of both end surfaces of stator 10 in axial direction X, one end surface (right end surface in FIGS. 2, 3) is opened, first bracket 15 is mounted to cover the opening, and the other end surface (left end surface in FIGS. 2, 3) is closed, and second bracket 16 is disposed to protrude as described above.

Next, as shown in FIGS. 2, 3, rotor 40 is inserted into stator 10 at a predetermined interval in radial direction Y. That is, motor 100 is an inner rotor type motor having rotor 40 disposed inside stator 10, and in the present exemplary embodiment, motor 100 of the above-described inner rotor type will be described as an example.

Rotor 40 includes rotating body 42 that holds a plurality of magnets 44 around rotating shaft 41 rotatably held by bearing 20A and bearing 20B. Rotating body 42 includes rotor core 43 and the plurality of magnets 44. Rotor core 43 is formed by, for example, laminating a plurality of thin iron plates in axial direction X, and is fixed to rotating shaft 41 at a central portion. Moreover, the plurality of magnets 44 are permanent magnets, and in the present exemplary embodiment, the plurality of magnets 44 are assembled on an outer peripheral surface of rotor core 43 with polarities of adjacent magnets 44 alternately changed.

Rotating shaft 41 that rotating body 42 described above is fastened to is rotatably supported by the two bearings, i.e., bearing 20A and bearing 20B. Bearings 20A, 20B are ball bearings. In the present exemplary embodiment, bearings 20A and 20B described above are fixed with first bracket 15 and second bracket 16 interposed, respectively, first bracket 15 and second bracket 16 being made of metal and being disposed on both the sides in the axial direction of stator 10.

As shown in FIGS. 2, 3, first bracket 15 has a substantially disk shape, and is configured to be mountable on the opening side of stator 10. Furthermore, holding portion 15a recessed in a cylindrical shape is formed at a central portion of first bracket 15, and bearing 20A is held by holding portion 15a. That is, by mounting, on stator 10, first bracket 15 having bearing 20A inserted into holding portion 15a, the one side of rotating shaft 41 is rotatably supported.

Second bracket 16 has a diameter smaller than a diameter of first bracket 15, and has a shape obtained by combining a disk and a cylinder. Further, second bracket 16 is fixed to mold resin 30 together with stator 10 by the above-described molding. Furthermore, holding portion 16a recessed in a cylindrical shape is also formed at a central portion of second bracket 16, and bearing 20B is held by holding portion 16a. That is, by inserting bearing 20B into holding portion 16a, the other side of rotating shaft 41 is rotatably supported. In the present exemplary embodiment, opening 16b is formed at the center of holding portion 16a, and rotating shaft 41 protrudes outward through opening 16b. This protruding portion of rotating shaft 41 serves as output shaft 41p for connecting a load or the like. Hereinafter, for convenience of description, in axial direction X, an extending side of output shaft 41p is referred to as an "output shaft side", and an opposite side of the output shaft side is referred to as a "counter-output shaft side". Further, as described below, since first incombustible material cover 17 is mounted on the counter-output shaft side of stator 10, the "counter-output shaft side" is also referred to as a "side where the first incombustible material cover is mounted".

Furthermore, in the present exemplary embodiment, motor 100 incorporates circuit board 19 on the opening side of stator 10. Circuit board 19 has a substantially disk shape, and opening 19b for passing rotating shaft 41 is formed at a central portion. Electronic components such as a drive circuit and a safety protection circuit are mounted on circuit board 19, and connection lines configured to apply a power supply voltage and a control signal, and the like are also connected to circuit board 19. A connection line for connection to the outside is led out to the outside through a wiring hole (not shown) provided in mold resin 30.

As described in the above background art, in motor 100 including coil assembly 14, if a safety protection function for preventing an excessive current flowing through coil 12 does not normally operate, an excessive current flows through coil 12. Consequently, coil 12 and the connecting wire generate heat and temperatures of coil 12 and the connecting wire become extremely high. As a result, a layer short may occur, a spark due to the layer short may occur, and further, there is also a risk that the generated spark ignite a gas generated from insulator 13 or the like and firing occurs. In particular, since coil ends 12a and the connecting wires as described above protrude from stator core 11, there is a high possibility that the above-described problem occurs.

Therefore, in the present exemplary embodiment, first incombustible material cover 17 and second incombustible material cover 18 are provided in order to prevent fire and smoke from coming outside from a main body of motor 100 due to a defect such as an excessive current flowing through coil 12 because the safety protection circuit does not normally function.

Hereinafter, first incombustible material cover 17, second incombustible material cover 18, and structures related to first incombustible material cover 17 and second incombustible material cover 18 will be described in detail.

First, first incombustible material cover 17 and a structure related to first incombustible material cover 17 will be described.

As shown in FIGS. 1 to 3, first incombustible material cover 17 made of metal is mounted on stator 10 on the counter-output shaft side. First incombustible material cover 17 is mounted on an outer peripheral surface of mold resin 30 to surround, over circumferential direction Z, coil ends 12a on the counter-output shaft side among the coil ends 12a protruding to both the sides in axial direction X. First incombustible material cover 17 has a cylindrical shape with both ends opened and a uniform diameter, and an inner diameter of the cylinder is substantially equal to an outer diameter of stator 10. In a state where first incombustible material cover 17 is mounted on the outer peripheral surface of mold resin 30, for example, by press-fitting, first incombustible material cover 17 includes each of coil ends 12a on the counter-output shaft side within a length range in axial direction X. That is, first incombustible material cover 17 covers entire coil end 12a on the counter-output shaft side in axial direction X. First incombustible material cover 17 also covers the connecting wires located on the outer peripheral surface on the radially outer side of insulator 13.

In this manner, first incombustible material cover 17 covers coil ends 12a on the counter-output shaft side and the connecting wires. Therefore, even if a fire is caused due to a defect such as a layer short as described above and the fire is about to spread radially outward from insulator 13 and the connecting wires, the fire and smoke are blocked by first incombustible material cover 17, and the fire and smoke can be prevented from coming outside motor 100.

As shown in FIGS. 1, 2, the plurality of (e.g., four at equal intervals) attaching legs 31 for attaching motor 100 to an external device or the like are integrally provided along circumferential direction Z on the outer peripheral surface of mold resin 30. As shown in FIGS. 2, 5, each of attaching legs 31 is provided with a bolt hole 31a that extends in axial direction X and an attaching bolt is inserted into. Further, in an end surface on the counter-output shaft side of each of attaching legs 31, in a root portion of attaching leg 31 connected to the outer peripheral surface of mold resin 30, circumferential groove 31b extending along circumferential direction Z and having a substantially U-shaped cross-sectional shape opened to both sides in circumferential direction Z and the one side in axial direction X. In a state where first incombustible material cover 17 is mounted on the outer peripheral surface of mold resin 30, distal end 17a of first incombustible material cover 17 on the output shaft side enters circumferential groove 31b of each of the plurality of attaching legs 31. Moreover, in an end surface on the output shaft side of each of attaching legs 31, reinforcing ribs 31c are appropriately formed on both sides of bolt hole 31a.

By forming circumferential groove 31b in attaching leg 31 and causing distal end 17a of first incombustible material cover 17 to enter circumferential groove 31b, first incombustible material cover 17 can be mounted on the outer peripheral surface of mold resin 30 without changing a position of attaching surface 31d of attaching leg 31 in axial direction X, that is, without changing distance L in axial direction X between attaching surface 31d and a distal end of output shaft 21.

Further, depth D of circumferential groove 31b in axial direction X can be appropriately set in accordance with an amount of interference between attaching leg 31 and first incombustible material cover 17 (e.g., set to 2 mm to 4 mm). Normally, in order to secure a strength of attaching leg 31, length H of attaching leg 31 in axial direction X (i.e., length in axial direction X of a main body portion of attaching leg 31 excluding reinforcing rib 31c) should be set to 7 mm to 10 mm. In the present exemplary embodiment, since circumferential groove 31b of about 2 mm to 4 mm is provided, for example, length H of attaching leg 31 in axial direction X can be set to 9 mm to 14 mm.

As shown in FIGS. 1 and 3, one or more positioners 32 that abut on distal end 17a of first incombustible material cover 17 are integrally formed on the outer peripheral surface of mold resin 30. As shown in FIGS. 3 and 6, positioner 32 is formed to protrude outward in radial direction Y on the outer peripheral surface of mold resin 30, and has a substantially rectangular shape long in circumferential direction Z. In the present exemplary embodiment, the plurality of (e.g., four) positioners 32 are provided at equal intervals in circumferential direction Z between adjacent attaching legs 31. Each of positioners 32 is formed at a position where an end portion of positioner 32 on the counter-output shaft side abuts on distal end 17a of first incombustible material cover 17 on the counter-output shaft side with respect to a bottom portion of circumferential groove 31b in axial direction X. As a result, when first incombustible material cover 17 is press-fitted onto the outer peripheral surface of mold resin 30, distal end 17a of first incombustible material cover 17 abuts on positioner 32 before reaching the bottom portion of circumferential groove 31b, so that first incombustible material cover 17 is positioned in axial direction X.

With the configuration where distal end 17a of first incombustible material cover 17 abuts on positioner 32 before reaching the bottom portion of circumferential groove 31b, when the first incombustible material cover is press-fitted, distal end 17a of first incombustible material cover 17 can be prevented from applying stress to attaching leg 31 to cause cracking, buckling, or the like in attaching leg 31.

Next, second incombustible material cover 18, and a structure related to second incombustible material cover 18 will be described.

As shown in FIGS. 1 to 3, second incombustible material cover 18 made of metal is mounted on the output shaft side of mold resin 30. Second incombustible material cover 18 is mounted on the outer peripheral surface of mold resin 30 to surround, over circumferential direction Z, coil ends 12a on the output shaft side among coil ends 12a protruding to both the sides in axial direction X. Second incombustible material cover 18 has a hollow cup shape having opening portion 18a at a center. Second incombustible material cover 18 is mounted on stator 10 with mold resin 30 interposed, second bracket 16 included in stator 10 penetrating opening portion 18a. In a state where second incombustible material cover 18 is mounted on the outer peripheral surface of mold resin 30, second incombustible material cover 18 includes each of coil ends 12a on the output shaft side within a length range in axial direction X. That is, second incombustible material cover 18 covers entire coil end 12a on the output shaft side in axial direction X. Second incombustible material cover 18 also covers the connecting wires located on the outer peripheral surface on the radially outer side of insulator 13.

In this manner, second incombustible material cover 18 covers coil ends 12a on the output shaft side and the connecting wires. Therefore, even if a fire is caused due to a defect such as a layer short as described above and the fire is about to spread radially outward from insulator 13 and the connecting wires, the fire and smoke are blocked by second incombustible material cover 18, and the fire and smoke can be prevented from coming outside motor 100.

In addition, metal materials such as iron, stainless steel, brass, and aluminum can be used for first incombustible material cover 17 and second incombustible material cover 18 made of metal described above.

In particular, when iron or brass is used, rust prevention performance can be improved by plating a surface of iron or brass. Specifically, when iron is used, a hot-dip galvanized steel sheet (JIS standard: SGCD) or an electrogalvanized steel sheet (JIS standard: SECD) can be used.

Motor 100 described above is configured by the following procedure.

First, stator 10 is configured by disposing coil assembly 14 and second bracket 16 at predetermined positions and integrally molding coil assembly 14 and second bracket 16. Bearings 20A, 20B are mounted on both the sides of rotating shaft 41 of rotor 40. Rotor 40 with bearings 20A, 20B mounted is inserted into stator 10, output shaft 41p protruding from opening portion 16b of second bracket 16. Next, bearing 20B is press-fitted into holding portion 16a of second bracket 16. Next, first incombustible material cover 17 is press-fitted onto the outer peripheral surface of mold resin 30 from the counter-output shaft side until first incombustible material cover 17 abuts on positioners 32. Next, circuit board 19 is mounted into the opening on the counter-output shaft side of stator 10. The connection line connected to circuit board 19 is led out to the outside through the wiring hole provided in mold resin 30. Bearing 20A is press-fitted into holding portion 15a of first bracket 15, and first bracket 15 is mounted on the counter-output shaft side of stator 10. Finally, second incombustible material cover 18 is mounted on the output shaft side of stator 10. In this way, motor 100 as shown in FIGS. 1 to 3 is finished.

By supplying a power supply voltage, a control signal, and the like to circuit board 19 via the connection line with respect to motor 100 configured as described above, coils 12 are energized and driven by the drive circuit mounted on circuit board 19. When each of coils 12 is energized, a drive current flows through coil 12, and a magnetic field is generated from stator core 11. Due to an alternating magnetic field from stator core 11 and magnetic fields from magnets 44 of rotor 40, an attractive force and a repulsive force are generated in accordance with the polarities of the magnetic fields, and these forces rotate rotor 40 in circumferential direction Z around the rotating shaft 41.

Hereinafter, a modification of the motor according to the present disclosure will be described.

In the above exemplary embodiment, the configuration has been described where distal end 17a of first incombustible material cover 17 is flush in axial direction X. However, at distal end 17a of first incombustible material cover 17, at positions corresponding to one or more positioners 32 in circumferential direction Z, cutout portions each having a shape corresponding to positioner 32 may be formed. In a state where first incombustible material cover 17 is mounted on the outer peripheral surface of mold resin 30, positioners 32 on the outer peripheral surface of mold resin 30 are locked with the corresponding cutout portions, and this allows first incombustible material cover 17 to be positioned in circumferential direction Z. In addition, in order to prevent distal end 17a of first incombustible material cover 17 from abutting on the bottom portion of circumferential groove 31b of each of attaching legs 31 and applying stress to attaching leg 31, each of positioner 32 in the present modification is moved to the counter-output shaft side by the depth of the cutout portion, as compared with positioner 32 in the above exemplary embodiment. That is, positioner 32 in the present modification is formed at the position where the positioner is locked with the cutout portion of first incombustible material cover 17 in axial direction X, and at the position where the bottom portion of circumferential groove 31b and distal end 17a of first incombustible material cover 17 do not abut on each other.

Moreover, in the exemplary embodiment described above, one or more positioners 32 that abut on distal end 17a of first incombustible material cover 17 are formed on the outer peripheral surface of mold resin 30. However, distal end 17a of first incombustible material cover 17 can abut on the bottom portions of circumferential grooves 31b of attaching legs 31 without providing positioners 32. In this case, preferably, a thick portion having a cross-sectional shape corresponding to the cross-sectional shape of each of circumferential grooves 31b is formed at distal end 17a of first incombustible material cover 17, and this prevents the distal end of the first incombustible material cover from buckling or prevents dust from entering a gap between distal end 17a of first incombustible material cover 17 and circumferential groove 31b. Further, by chamfering distal end 17a of first incombustible material cover 17, it is possible to prevent a corner portion of distal end 17a of first incombustible material cover 17 from applying stress to the bottom portion of circumferential groove 31b.

While in the above exemplary embodiment, it is described that the cross-sectional shape of the circumferential groove is a substantially U shape, the present disclosure is not limited thereto. For example, the cross-sectional shape of circumferential groove 31b may be any shape such as a tapered shape.

Further, while in the above exemplary embodiment, it is described that first incombustible material cover 17 and second incombustible material cover 18 are made of an incombustible material such as metal, the present disclosure is not limited to the exemplary embodiment. An inorganic material such as a ceramic or aluminum hydroxide molded article can also be used for first incombustible material cover 17 and second incombustible material cover 18.

Moreover, while the configuration where circumferential grooves 31b are formed in attaching legs 31 has been described in the above exemplary embodiment, a plurality of cutout portions may be formed at positions corresponding to the plurality of attaching legs 31 in circumferential direction Z in distal end 17a of first incombustible material cover 17 without providing circumferential grooves 31b. In a state where first incombustible material cover 17 is mounted on the outer peripheral surface of mold resin 30, each of the plurality of attaching legs 31 enters the plurality of cutout portions of first incombustible material cover 17, and this also allows first incombustible material cover 17 to be positioned in axial direction X and circumferential direction Z. In addition, while there is a portion where coil end 12a is not covered with first incombustible material cover 17 at the position of attaching leg 31, mold resin 30 becomes thick at the position of attaching leg 31, and thus there is a low possibility that fire or smoke comes out from this portion.

Moreover, while in the above exemplary embodiment, a surface permanent magnet motor (SPM motor) where magnets 44 are held on the outer peripheral surface of rotor 40 has been described as an example, an interior permanent magnet (IPM) motor where magnets 44 are disposed inside rotor core 43 may be used.

The above description is merely a mode for carrying out the present disclosure. The technical scope of the present disclosure is not limited thereto, and all changes and alternatives that can be easily conceived by those skilled in the art within the technical scope of the present disclosure belong to the technical scope of the present disclosure. Therefore, the technical scope of the present disclosure should be based on the technical scope of the claims.

### INDUSTRIAL APPLICABILITY

The configuration of the present disclosure can be applied in a wide range to a so-called mold motor where a stator is covered with a mold resin.

### REFERENCE MARKS IN THE DRAWINGS

- 100: motor
- 10: stator
- 11: stator core
- 11a: yoke
- 11b: tooth
- 11ba: tooth intermediate portion
- 11bb: tooth distal end portion
- 11c: slot
- 12: coil
- 12a: coil end
- 13: insulator
- 14: coil assembly
- 15: first bracket
- 15a: holding portion
- 16: second bracket
- 16a: holding portion
- 16b: opening
- 17: first incombustible material cover
- 17a: distal end
- 18: second incombustible material cover
- 18a: opening portion
- 19: circuit board
- 19b: opening
- 20A, 20B: bearing
- 30: mold resin
- 31: attaching leg
- 31a: bolt hole
- 31b: circumferential groove
- 31c: reinforcing rib
- 31d: attaching surface
- 32: positioner
- 40: rotor
- 41: rotating shaft
- 41p: output shaft
- 42: rotating body
- 43: rotor core
- 44: magnet
- 500: motor
- 510: stator
- 511: stator core
- 512: coil
- 512a: coil end
- 513: insulator
- 517, 518: metal cover
- 530: mold resin
- 531: attaching leg
- 534: circuit board
- 540: rotor
- X: axial direction
- Y: radial direction
- Z: circumferential direction

## Claims

1. A motor (100) comprising:
a stator (10) having a stator core (11) and a coil (12) wound around the stator core (11);
a rotor (40) that has a rotating shaft (41) extending in an axial direction (X) and is rotatably located inside the stator (10); and
a mold resin (30) covering the stator (10), wherein
the coil (12) has coil ends (12a) protruding from the stator core (11) to both sides in the axial direction (X),
a first incombustible material cover (17) is mounted on an outer peripheral surface of the mold resin (30) to surround, over a circumferential direction (Z), one of the coil ends (12a) protruding to both the sides in the axial direction (X),
a plurality of attaching legs (31) are provided along the circumferential direction (Z) on the outer peripheral surface of the mold resin (30),
a root portion of each of the plurality of attaching legs (31) being connected to the outer peripheral surface of the mold resin (30),
**characterized in that**
each of the root portions is formed with a circumferential groove (31b) extending along the circumferential direction (Z) and opened to both sides in the circumferential direction (Z) and one side in the axial direction (X), and
a distal end (17a) of the first incombustible material cover (17) on the one side in the axial direction (X) enters the circumferential groove (31b) of each of the plurality of attaching legs (31).

2. The motor according to claim 1, wherein
one or more positioners (32) that abut on the distal end (17a) of the first incombustible material cover (17) are formed on the outer peripheral surface of the mold resin (30),
the one or more positioners (32) are each positioned and formed between the plurality of attaching legs (31) in the circumferential direction (Z), and
the one or more positioners (32) are each formed at a position where, in the axial direction (X), an end portion of the positioner on the side where the first incombustible material cover (17) is mounted abuts on the distal end (17a) of the first incombustible material cover (17) on the side where the first incombustible material cover (17) is mounted with respect to a bottom portion of the circumferential groove (31b).

3. The motor according to claim 1, wherein
one or more positioners (32) are formed on the outer peripheral surface of the mold resin (30),
the one or more positioners (32) are each positioned and formed between the plurality of attaching legs (31) in the circumferential direction (Z),
a cutout portion having a shape corresponding to the one or more positioners (32) is formed at a position each corresponding to the one or more positioners (32) in the circumferential direction (Z) at the distal end (17a) of the first incombustible material cover (17), and
the one or more positioners (32) are each formed at a position where each of the one or more positioners (32) is locked with the cutout portion of the first incombustible material cover (17), and at a position where a bottom portion of the circumferential groove (31b) and the distal end (17a) of the first incombustible material cover (17) do not abut on each other in the axial direction (X).

4. The motor according to claim 2 or claim 3, wherein a plurality of the positioners (32) are formed at equal intervals in the circumferential direction (Z) on the outer peripheral surface of the mold resin (30).

5. The motor according to claim 1, wherein the first incombustible material cover (17) is formed of metal.

6. The motor according to claim 5, wherein the first incombustible material cover (17) is formed of iron, stainless steel, brass, or aluminum.

7. The motor according to claim 1, wherein a cross-sectional shape of the circumferential groove (31b) is substantially a U shape.

8. The motor according to claim 1, wherein a cross-sectional shape of the circumferential groove (31b) is a tapered shape.

9. The motor according to claim 7 or claim 8, wherein a thick portion having a cross-sectional shape corresponding to the cross-sectional shape of the circumferential groove (31b) is formed at the distal end (17a) of the first incombustible material cover (17).

10. The motor according to claim 1, wherein the distal end (17a) of the first incombustible material cover (17) is chamfered.

11. The motor according to claim 1, wherein a length of the attaching leg in the axial direction (X) is in a range of 9 mm to 14 mm.

12. The motor according to claim 11, wherein a depth of the circumferential groove (31b) in the axial direction (X) is in a range of 2 mm to 4 mm.

13. The motor according to claim 1, wherein a reinforcing rib is formed on the attaching leg on a side opposite to a side where the circumferential groove (31b) is formed in the axial direction (X).

14. The motor according to claim 1, wherein on the outer peripheral surface of the mold resin (30), a second incombustible material cover is mounted to surround, over the circumferential direction (Z), another coil end of the coil ends (12a) protruding to both the sides in the axial direction (X).

15. The motor according to claim 1, wherein the first incombustible material cover (17) also covers a connecting wire of the coil (12).

16. The motor (100) according to claim 1, further comprising:
a plurality of cutout portions are formed at positions corresponding to the plurality of attaching legs (31) in the circumferential direction (Z) at a distal end (17a) of the first incombustible material cover (17), and
the first incombustible material cover (17) is mounted, each of the plurality of attaching legs (31) entering each of the plurality of cutout portions.

## Patentansprüche

1. Motor (100), der umfasst:
einen Stator (10) mit einem Statorkern (11) und einer um den Statorkern (11) gewickelten Spule (12);
ein Rotor (40) mit einer rotierenden Welle (41), die sich in axialer Richtung (X) erstreckt und drehbar im Stator (10) angeordnet ist; und
ein Formharz (30), das den Stator (10) bedeckt, wobei
die Spule (12) Spulenenden (12a) aufweist, die in axialer Richtung (X) auf beiden Seiten aus dem Statorkern (11) herausragen,
eine erste Abdeckung (17) aus nicht brennbarem Material an einer äußeren Umfangsfläche des Formharzes (30) angebracht ist, um in Umfangsrichtung (Z) eines der Spulenenden (12a) zu umschließen, die in axialer Richtung (X) zu beiden Seiten herausragen,
mehrere Befestigungsbeine (31) in Umfangsrichtung (Z) auf der äußeren Umfangsfläche des Formharzes (30) angeordnet sind,
ein Ausgangsabschnitt jedes der zahlreichen Befestigungsbeine (31) mit der äußeren Umfangsfläche des Formharzes (30) verbunden ist,
**dadurch gekennzeichnet, dass**
jeder Ausgangsabschnitt eine umlaufende Nut (31b) aufweist, die sich in Umfangsrichtung (Z) erstreckt und in Umfangsrichtung (Z) zu beiden Seiten und in axialer Richtung (X) zu einer Seite offen ist, und
ein distales Ende (17a) der ersten Abdeckung (17) aus nicht brennbarem Material auf der einen Seite in axialer Richtung (X) in die umlaufende Nut (31b) jedes der zahlreichen Befestigungsbeine (31) eintritt.

2. Motor nach Anspruch 1, wobei
auf der äußeren Umfangsfläche des Formharzes (30) ein oder mehrere Positionierer (32) ausgebildet sind, die am distalen Ende (17a) der ersten Abdeckung (17) aus nicht brennbarem Material anliegen,
der eine oder die mehreren Positionierer (32) jeweils zwischen den mehreren Befestigungsbeinen (31) in Umfangsrichtung (Z) positioniert und ausgebildet sind, und
der eine oder die mehreren Positionierer (32) jeweils an einer Position ausgebildet sind, an der, in axialer Richtung (X), ein Endabschnitt des Positionierers auf der Seite, auf der die erste Abdeckung (17) aus nicht brennbarem Material montiert ist, an das distale Ende (17a) der ersten Abdeckung (17) aus nicht brennbarem Material auf der Seite anstößt, auf der die erste Abdeckung (17) aus nicht brennbarem Material montiert ist, in Bezug auf einen unteren Abschnitt der umlaufenden Nut (31b).

3. Motor nach Anspruch 1, wobei
auf der äußeren Umfangsfläche des Formharzes (30) ein oder mehrere Positionierer (32) ausgebildet sind,
der eine oder die mehreren Positionierer (32) jeweils zwischen den mehreren Befestigungsbeinen (31) in Umfangsrichtung (Z) positioniert und ausgebildet sind,
am distalen Ende (17a) der ersten Abdeckung aus nicht brennbarem Material (17) an einer Position (Z), die jeweils einem oder mehreren Positionierern (32) entspricht, ein Ausschnitt mit einer Form ausgebildet wird, die dem oder den Positionierern (32) entspricht,
der eine oder die mehreren Positionierer (32) jeweils an einer Stelle ausgebildet sind, an der jeder der Positionierer (32) mit dem Ausschnitt der ersten Abdeckung (17) aus nicht brennbarem Material verriegelt ist, und an einer Stelle, an der ein unterer Abschnitt der umlaufenden Nut (31b) und das distale Ende (17a) der ersten Abdeckung (17) aus nicht brennbarem Material in axialer Richtung (X) nicht aneinanderstoßen.

4. Motor nach Anspruch 2 oder 3, wobei mehrere Positionierer (32) in gleichen Abständen in Umfangsrichtung (Z) auf der äußeren Umfangsfläche des Formharzes (30) ausgebildet sind.

5. Motor nach Anspruch 1, wobei die erste Abdeckung (17) aus nicht brennbarem Material aus Metall besteht.

6. Motor nach Anspruch 5, wobei die erste Abdeckung (17) aus nicht brennbarem Material aus Eisen, Edelstahl, Messing oder Aluminium besteht.

7. Motor nach Anspruch 1, wobei die Querschnittsform der Umfangsnut (31b) im Wesentlichen U-förmig ist.

8. Motor nach Anspruch 1, wobei die Querschnittsform der Umfangsnut (31b) eine konische Form aufweist.

9. Motor nach Anspruch 7 oder 8, wobei am distalen Ende (17a) der ersten Abdeckung (17) aus nicht brennbarem Material ein dicker Abschnitt mit einer Querschnittsform ausgebildet ist, die der Querschnittsform der Umfangsnut (31b) entspricht.

10. Motor nach Anspruch 1, bei dem das distale Ende (17a) der ersten Abdeckung (17) aus nicht brennbarem Material abgeschrägt ist.

11. Motor nach Anspruch 1, wobei die Länge des Befestigungsbeins in axialer Richtung (X) im Bereich von 9 mm bis 14 mm liegt.

12. Motor nach Anspruch 11, wobei die Tiefe der Umfangsnut (31b) in axialer Richtung (X) im Bereich von 2 mm bis 4 mm liegt.

13. Motor nach Anspruch 1, wobei an dem Befestigungsbein auf der Seite, die der Seite gegenüberliegt, auf der die Umfangsnut (31b) in axialer Richtung (X) ausgebildet ist, eine Verstärkungsrippe ausgebildet ist.

14. Motor nach Anspruch 1, bei dem auf der äußeren Umfangsfläche des Formharzes (30) eine zweite Abdeckung aus nicht brennbarem Material angebracht ist, die in Umfangsrichtung (Z) ein weiteres der Spulenenden (12a) umschließt, die in axialer Richtung (X) zu beiden Seiten herausragen.

15. Motor nach Anspruch 1, wobei die erste Abdeckung (17) aus nicht brennbarem Material auch einen Anschlussdraht der Spule (12) bedeckt.

16. Motor (100) nach Anspruch 1, der ferner umfasst:
mehrere Ausschnitte, die an einem distalen Ende (17a) der ersten Abdeckung (17) aus nicht brennbarem Material an Positionen ausgebildet sind, die den Befestigungsbeinen (31) in Umfangsrichtung (Z) entsprechen,
wobei die erste Abdeckung (17) aus nicht brennbarem Material so montiert ist, dass jedes der zahlreichen Befestigungsbeine (31) in einen der mehreren Ausschnitte eingreift.

## Revendications

1. Moteur (100) comprenant :
un stator (10) ayant un noyau de stator (11) et une bobine (12) enroulée autour du noyau de stator (11),
un rotor (40) qui a un arbre rotatif (41) s'étendant dans une direction axiale (X) et qui est agencé rotatif à l'intérieur du stator (10), et
une résine de moulage (30) recouvrant le stator (10) ; étant entendu que
la bobine (12) présente des extrémités de bobine (12a) faisant saillie du noyau de stator (11) des deux côtés dans la direction axiale (X),
un premier cache en matériau incombustible (17) est monté sur une surface périphérique extérieure de la résine de moulage (30) de façon à entourer, sur une direction circonférentielle (Z), une des extrémités de bobine (12a) faisant saillie des deux côtés dans la direction axiale (X),
une pluralité de pattes de fixation (31) sont prévues le long de la direction circonférentielle (Z) sur la surface périphérique extérieure de la résine de moulage (30), une portion de base de chaque patte de la pluralité de pattes de fixation (31) étant raccordée à la surface périphérique extérieure de la résine de moulage (30) ;
**caractérisé en ce que** chacune des portions de base présente la formation d'une rainure circonférentielle (31b) qui s'étend le long de la direction circonférentielle (Z) et qui est ouverte des deux côtés dans la direction circonférentielle (Z) et d'un côté dans la direction axiale (X), et
une extrémité distale (17a) du premier cache en matériau incombustible (17) sur ledit côté dans la direction axiale (X) pénètre dans la rainure circonférentielle (31b) de chaque patte de la pluralité de pattes de fixation (31).

2. Moteur selon la revendication 1, dans lequel
un ou plusieurs positionneurs (32) qui viennent en butée contre l'extrémité distale (17a) du premier cache en matériau incombustible (17) sont formés sur la surface périphérique extérieure de la résine de moulage (30),
le ou les positionneurs (32) sont chacun positionnés et formés entre la pluralité de pattes de fixation (31) dans la direction circonférentielle (Z), et
le ou les positionneurs (32) sont chacun formés en une position où, dans la direction axiale (X), une portion d'extrémité du positionneur du côté où le premier cache en matériau incombustible (17) est monté bute contre l'extrémité distale (17a) du premier cache en matériau incombustible (17) du côté où le premier cache en matériau incombustible (17) est monté par rapport à une portion inférieure de la rainure circonférentielle (31b).

3. Moteur selon la revendication 1, dans lequel
un ou plusieurs positionneurs (32) sont formés sur la surface périphérique extérieure de la résine de moulage (30),
le ou les positionneurs (32) sont chacun positionnés et formés entre la pluralité de pattes de fixation (31) dans la direction circonférentielle (Z),
une portion découpée ayant une forme correspondant auxdits un ou plusieurs positionneurs (32) est formée en une position correspondant respectivement auxdits un ou plusieurs positionneurs (32) dans la direction circonférentielle (Z) à l'extrémité distale (17a) du premier cache en matériau incombustible (17), et
le ou les positionneurs (32) sont chacun formés en une position où le ou les positionneurs (32) sont chacun verrouillés avec la portion découpée du premier cache en matériau incombustible (17), et en une position où une portion inférieure de la rainure circonférentielle (31b) et l'extrémité distale (17a) du premier cache en matériau incombustible (17) ne butent pas l'une contre l'autre dans la direction axiale (X).

4. Moteur selon la revendication 2 ou la revendication 3, dans lequel une pluralité de positionneurs (32) sont formés à intervalles réguliers dans la direction circonférentielle (Z) sur la surface périphérique extérieure de la résine de moulage (30).

5. Moteur selon la revendication 1, dans lequel le premier cache en matériau incombustible (17) est formé à partir de métal.

6. Moteur selon la revendication 5, dans lequel le premier cache en matériau incombustible (17) est formé à partir de fer, d'acier inoxydable, de laiton ou d'aluminium.

7. Moteur selon la revendication 1, dans lequel la forme en coupe transversale de la rainure circonférentielle (31b) est sensiblement en U.

8. Moteur selon la revendication 1, dans lequel la forme en coupe transversale de la rainure circonférentielle (31b) est effilée.

9. Moteur selon la revendication 7 ou la revendication 8, dans lequel une portion épaisse ayant une forme en coupe transversale correspondant à la forme en coupe transversale de la rainure circonférentielle (31b) est formée à l'extrémité distale (17a) du premier cache en matériau incombustible (17).

10. Moteur selon la revendication 1, dans lequel l'extrémité distale (17a) du premier cache en matériau incombustible (17) est chanfreinée.

11. Moteur selon la revendication 1, dans lequel la longueur de la patte de fixation dans la direction axiale (X) se situe dans une plage de 9 mm à 14 mm.

12. Moteur selon la revendication 11, dans lequel la profondeur de la rainure circonférentielle (31b) dans la direction axiale (X) se situe dans une plage de 2 mm à 4 mm.

13. Moteur selon la revendication 1, dans lequel une nervure de renfort est formée sur la patte de fixation sur un côté opposé au côté où la rainure circonférentielle (31b) est formée dans la direction axiale (X).

14. Moteur selon la revendication 1, dans lequel, sur la surface périphérique extérieure de la résine de moulage (30), un deuxième cache en matériau incombustible est monté de façon à entourer, dans la direction circonférentielle (Z), une autre extrémité de bobine parmi les extrémités de bobine (12a) faisant saillie des deux côtés dans la direction axiale (X).

15. Moteur selon la revendication 1, dans lequel le premier cache en matériau incombustible (17) recouvre également un fil de raccordement de la bobine (12).

16. Moteur (100) selon la revendication 1, dans lequel en outre :
une pluralité de portions découpées sont formées en des positions correspondant à la pluralité de pattes de fixation (31) dans la direction circonférentielle (Z) à une extrémité distale (17a) du premier cache en matériau incombustible (17), et
le premier cache en matériau incombustible (17) étant monté, chaque patte de la pluralité de pattes de fixation (31) entre dans chaque portion de la pluralité de portions découpées.
